# EUROPÄISCHE PATENTSCHRIFT

(11) **EP 3 597 470 B1**
(45) Veröffentlichungstag und Bekanntmachung des Hinweises auf die Patenterteilung: **31.03.2021**
(21) Anmeldenummer: 19185922.2
(22) Anmeldetag: 12.07.2019
(51) Int. Cl.: B60L 9/00, H02G 11/00, H04B 3/02, B65H 54/28, H02G 3/03, A01D 43/073, A01D 41/02

(54) **VERFAHREN ZUR ENERGIEVERSORGUNG EINES KABELGEBUNDEN BETRIEBENEN FELDHÄCKSLERS**
METHOD FOR ENERGY SUPPLY OF A WIRELINE POWERED HARVESTER
PROCÉDÉ D'ALIMENTATION EN ÉNERGIE D'UNE MOISSONNEUSE ENTRAÎNÉS PAR CÂBLE

(30) Priorität: 20.07.2018 DE 102018212150
(43) Veröffentlichungstag der Anmeldung: 22.01.2020
(73) Patentinhaber: Deere & Company, Moline, IL 61265 (US)
(72) Erfinder: Brill, Christian, 68163 Mannheim (DE); Tarasinski, Nicolai, 68163 Mannheim (DE); Kegel, Volker, 68163 Mannheim (DE); Lehmann, Philipp, 68163 Mannheim (DE)
(74) Vertreter: Dehnhardt, Florian Christopher

(56) Entgegenhaltungen:
- EP-A1- 3 001 522
- WO-A1-2016/063883
- CN-A- 105 746 076
- CN-B- 105 723 918

## Beschreibung

Die Erfindung bezieht sich auf ein Verfahren zur Energieversorgung eines kabelgebunden betriebenen Feldhäckslers.

Die aufkommende Elektrifizierung in der Landwirtschaftstechnik bietet gegenüber konventionellen Antrieben, die auf der Verwendung von Dieselmotoren beruhen, die Möglichkeit, höhere Antriebsleistungen bei zugleich geringerem Bauraumbedarf zu verwirklichen. Dies bietet sich vor allem bei leistungsintensiven Bearbeitungsprozessen an, wie sie insbesondere für den Betrieb eines Feldhäckslers typisch sind. Der Leistungsbedarf kann je nach dem Durchsatzvermögen des Feldhäckslers bis zu einige Megawatt betragen. Eine Möglichkeit der elektrischen Versorgung eines derartigen Feldhäckslers mit ausreichender Leistung besteht im kabelgebundenen Betrieb.

CN 105 746 076 zeigt eine elektrisch betriebene Erntemaschine.

Es ist Aufgabe der vorliegenden Erfindung, ein Verfahren der eingangs genannten Art anzugeben, das einen zuverlässigen Betrieb eines kabelgebunden betriebenen Feldhäckslers erlaubt.

Diese Aufgabe wird durch ein Verfahren mit den Merkmalen des Patentanspruchs 1 gelöst.

Bei dem Verfahren zur Energieversorgung eines kabelgebunden betriebenen Feldhäckslers umfasst der Feldhäcksler eine Kabeltrommel zur Aufnahme einer Energieversorgungsleitung, einen mit der Kabeltrommel verbundenen Wickelantrieb zum Auf- und Abspulen der Energieversorgungsleitung, einen mittels einer Betätigungsanordnung bezüglich seiner Orientierung und/oder Ausfahrlänge verstellbaren Kabelarm im Heckbereich des Feldhäckslers, welcher der geführten Ablage bzw. Aufnahme der Energieversorgungsleitung entlang einer zu befahrenden Ackeroberfläche dient, und einen über den Kabelarm hinweg verschwenkbaren Auswurfturm zum Überladen gehäckselten Ernteguts auf ein nebenher fahrendes Transportfahrzeug. Erfindungsgemäß wird der Wickelantrieb in Verbindung mit der Betätigungsanordnung des Kabelarms entlang eines ersten Bearbeitungsabschnitts von einer Kontrolleinheit derart angesteuert, dass die Energieversorgungsleitung in einem abgeernteten Bereich zwischen dem Feldhäcksler und einem noch abzuerntenden Bereich versetzt zur Fahrspur des Feldhäckslers auf der Ackeroberfläche abgelegt wird, und nach Durchfahren eines Vorgewendes entlang eines an den ersten Bearbeitungsabschnitt angrenzenden bzw. diesen überschneidenden zweiten Bearbeitungsabschnitts in dem abgeernteten Bereich von der Ackeroberfläche wieder aufgenommen wird.

Mit anderen Worten wird die Energieversorgungsleitung entlang des ersten Bearbeitungsabschnitts auf einem definierten, insbesondere GPS-positionierten Kabelpfad abgelegt und von dort beim Abernten der angrenzenden Pflanzenreihe entlang des zweiten Bearbeitungsabschnitts wieder aufgenommen, ohne dass es zu Überschneidungen mit der Fahrspur des Feldhäckslers oder des Transportfahrzeugs kommt. Das Transportfahrzeug befindet sich dabei stets auf der dem abgeernteten Bereich zugewandten Seite des Feldhäckslers. Dementsprechend wird der Auswurfturm beim Durchfahren des Vorgewendes, also beim Wenden über den Kabelarm hinweg auf die gegenüberliegende Seite des Feldhäckslers geschwenkt. Die Ablage der Energieversorgungsleitung erfolgt derart, dass entlang des zweiten Bearbeitungsabschnitts beim Überladen des gehäckselten Ernteguts stets ein ausreichender Abstand gegenüber dem Transportfahrzeug eingehalten werden kann.

Während des gesamten Erntevorgangs werden die beiden Bearbeitungsabschnitte periodisch hintereinander durchlaufen, bis die komplette Ackeroberfläche streifenförmig abgeerntet worden ist.

Vorteilhafte Ausgestaltungen des erfindungsgemäßen Verfahrens gehen aus den Unteransprüchen hervor.

Vorzugweise wird der Wickelantrieb in Verbindung mit der Betätigungsanordnung des Kabelarms von der Kontrolleinheit beim Durchfahren des Vorgewendes zwischen dem ersten und zweiten Bearbeitungsabschnitt derart angesteuert, dass die Energieversorgungsleitung beim Übergang vom ersten zum zweiten Bearbeitungsabschnitt im Wesentlichen zugkraftfrei nachgeführt wird. Definitionsgemäß ist die Energieversorgungleitung im Wesentlichen dann zugkraftfrei, wenn diese während des Wendevorgangs im Vorgewende ihre Lage zwischen den beiden Bearbeitungsabschnitten weitgehend beibehält, mithin die nächste abzuerntende Pflanzenreihe nicht durch unerwünschte Lageänderungen beschädigt wird.

Um eine mechanische Überlastung der Energieversorgungsleitung zu vermeiden, besteht die Möglichkeit, dass die Energieversorgungsleitung fahrtgeschwindigkeitsabhängig, insbesondere unter Einhaltung einer vorgegebenen Höchstzugkraft auf der Ackeroberfläche abgelegt wird. Die aktuelle Zugkraft kann von der Kontrolleinheit insbesondere anhand des Austrittswinkels der Energieversorgungsleitung im Bereich eines Führungselements am Kabelarm abgeschätzt werden. Insofern sei auf die aus der DE 10 2017 201 544 A1 bekannte Sensoranordnung hingewiesen.

Typischerweise wird die Energieversorgungsleitung seitens einer Umspannstation mit elektrischer Energie gespeist. Diese befindet sich im Randbereich des zu bearbeitenden Ackers und steht insbesondere mit einer Überlandleitung in Verbindung. Die Umspannstation weist im Allgemeinen einen Umspanntransformator zur Bereitstellung einer Mittelspannung in der Größenordnung von 4000 bis 8000 Volt auf, sodass die Übertragung ausreichender elektrischer Leistungen bei zugleich akzeptablen Leitungsdurchmessern gewährleistet ist. Die Energieversorgungsleitung ist mittels eines Leistungssteckverbinders lösbar an der Umspannstation angeschlossen.

Auch ist es denkbar, dass über die Energieversorgungsleitung ein Abstandssignal ausgesandt wird, das zur berührungslosen Ableitung eines gegenüber der Energieversorgungsleitung einzuhaltenden Sicherheitsabstands vorgesehen ist. So lässt sich beispielsweise eine übermäßige Annäherung des Transportfahrzeugs an die Energieversorgungsleitung erkennen und durch Einleitung geeigneter Gegenmaßnahmen abwenden. Diese können beispielsweise in Form eines von einer Fahrzeugsteuerung durchgeführten korrigierenden Lenkeingriffs oder Notstopps des Transportfahrzeugs sowie gegebenenfalls des Feldhäckslers erfolgen.

Das erfindungsgemäße Verfahren wird im Folgenden anhand der beigefügten Zeichnungen näher erläutert. Hierbei sind übereinstimmende oder bezüglich ihrer Funktion vergleichbare Komponenten mit denselben Bezugszeichen gekennzeichnet. Es zeigen:
- Fig. 1: eine perspektivische Ansicht eines kabelgebunden betriebenen Feldhäckslers,
- Fig. 2: ein Ausführungsbeispiel einer Anordnung zur Durchführung des erfindungsgemäßen Verfahrens für den kabelgebunden betriebenen Feldhäcksler in Fig. 1,
- Fig. 3: der in Fig. 1 wiedergegebene Feldhäcksler beim Durchfahren eines ersten Bearbeitungsabschnitts auf einem Acker, und
- Fig. 4: der in Fig. 1 wiedergegebene Feldhäcksler beim Durchfahren eines auf den ersten Bearbeitungsabschnitt folgenden zweiten Bearbeitungsabschnitts.

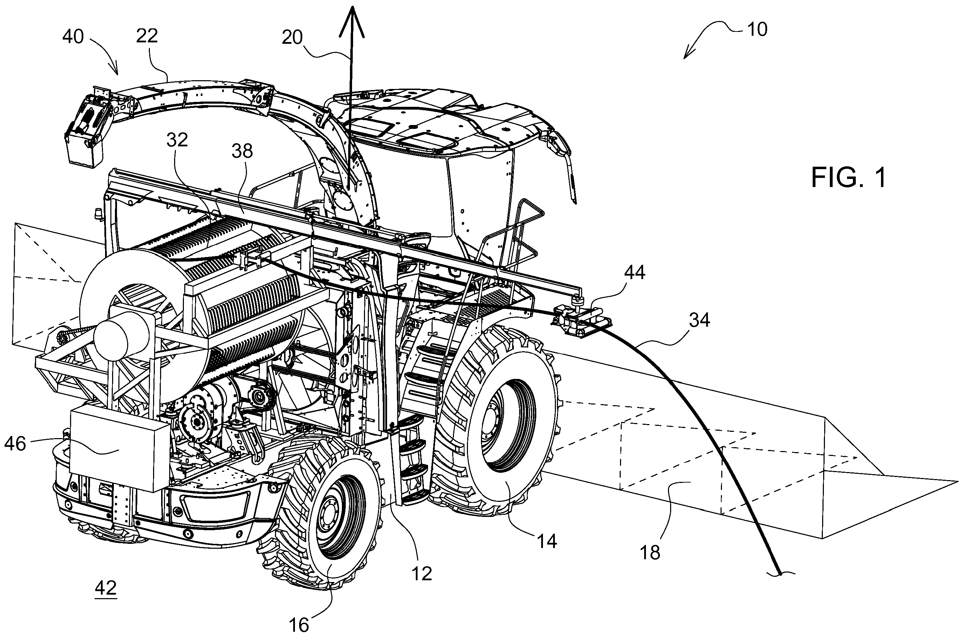

Fig. 1 zeigt eine perspektivische Ansicht eines kabelgebunden betriebenen Feldhäckslers.

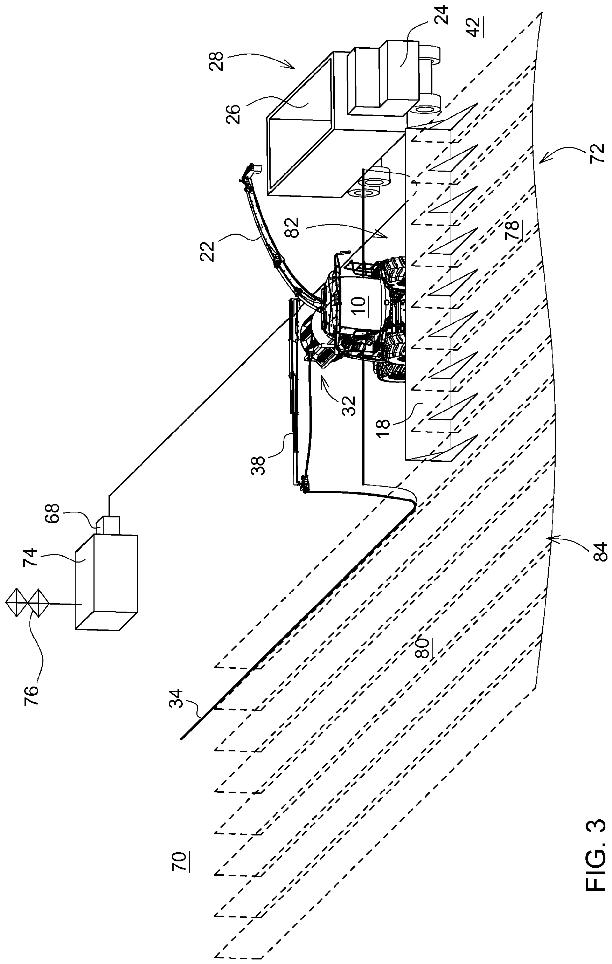

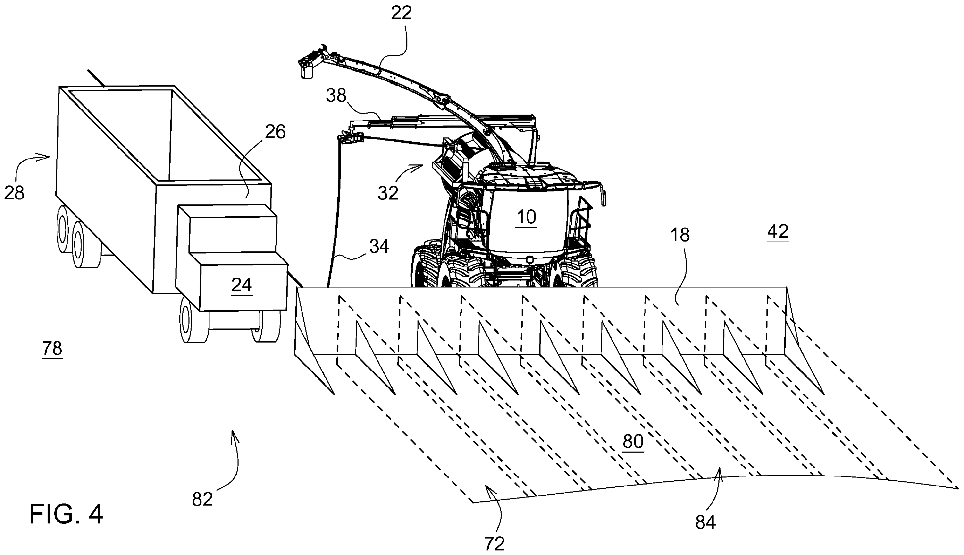

Der Feldhäcksler 10 weist ein Chassis 12 auf, das von angetriebenen Vorderrädern 14 und lenkbaren Hinterrädern 16 getragen wird. Ein Erntevorsatz 18 dient der Aufnahme von zu häckselndem Erntegut, wobei dieses innerhalb des Feldhäckslers 10 zerkleinert und einem bezüglich einer in etwa vertikalen Fahrzeugachse 20 und in seiner Neigung verstellbaren Auswurfturm 22 zum Überladen auf ein nebenher fahrendes Transportfahrzeug zugeführt wird. Letzteres weist die Gestalt eines aus einem landwirtschaftlichen Traktor 24 sowie einem von diesem gezogenen Überladewagen 26 bestehenden Fahrzeuggespanns 28 auf (siehe Fig. 3 und 4). Bei dem Erntegut handelt es sich beispielsweise um Mais, Gras oder Luzerne.

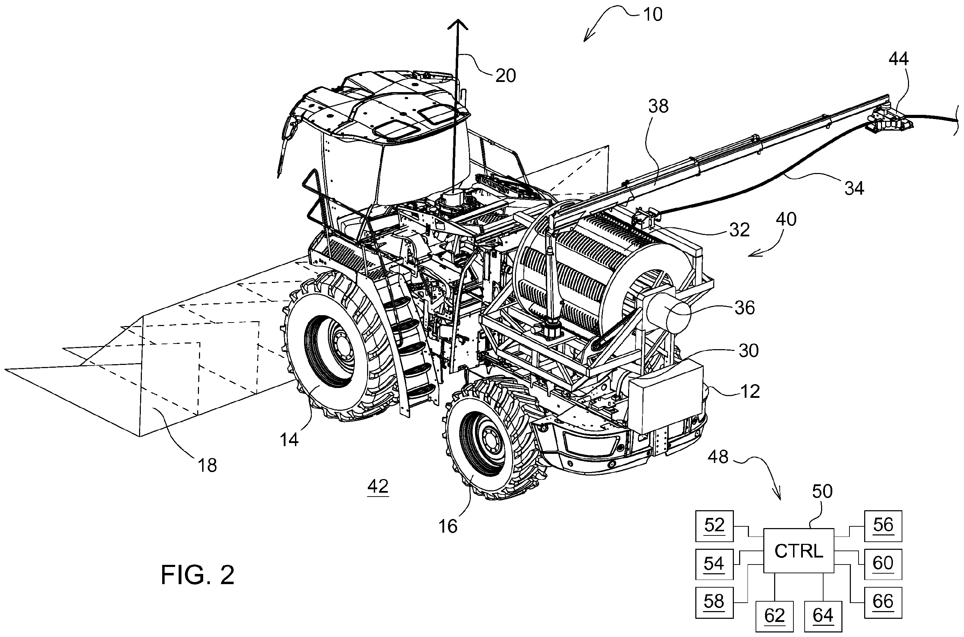

Entsprechend der Darstellung in Fig. 2 ist der Feldhäcksler 10 vorliegend mit einem elektrischen Betriebsaggregat 30 zum Antreiben der Vorderräder 14 sowie zur Zufuhr und Verarbeitung des zu häckselnden Ernteguts ausgerüstet, wobei das Betriebsaggregat 30 mittels einer auf einer Kabeltrommel 32 befindlichen Energieversorgungsleitung 34 in Gestalt eines mehrpoligen elektrischen Kabels mit elektrischem Strom versorgt wird. Ein mit der Kabeltrommel 32 verbundener Wickelantrieb 36 ermöglicht ein gezieltes Auf- und Abspulen der Energieversorgungsleitung 34, wobei ein bezüglich seiner Orientierung und/oder Ausfahrlänge verstellbarer Kabelarm 38 im Heckbereich 40 des Feldhäckslers 10 vorgesehen ist, welcher der geführten Ablage bzw. Aufnahme der Energieversorgungsleitung 34 entlang einer zu befahrenden Ackeroberfläche 42 dient und zu diesem Zweck ein Führungselement 44 aufweist. Bei der Kabeltrommel 32 handelt es sich um eine luftgekühlte Ausführung, wie sie aus der DE 10 2017 215 822 A1 hervorgeht.

In einem im Heckbereich 40 des Feldhäckslers 10 angeordneten Schaltschrank 46 ist eine in Fig. 2 im Detail wiedergegebene Anordnung 48 untergebracht, die eine mikroprozessorgesteuerte Kontrolleinheit 50 aufweist, die der Durchführung des erfindungsgemäßen Verfahrens dient.

Die Kontrolleinheit 50 steht mit einem GPS-Navigationssystem 52, einem Topografiespeicher 54, einem autonomen Lenksystem 56, einer Mobilfunkschnittstelle 58, einem elektrischen Getriebemotor 60 des Wickelantriebs 36, einer Betätigungsanordnung 62 zum Verstellen des Kabelarms 38, einer weiteren Betätigungsanordnung 64 zum Verstellen des Auswurfturms 22 sowie einer Transpondereinheit 66 in Verbindung.

Das von der Kontrolleinheit 50 durchgeführte erfindungsgemäße Verfahren soll nachfolgend unter Bezugnahme auf die in Fig. 3 und Fig. 4 dargestellten Bearbeitungssituationen im Detail beschrieben werden.

Zu Beginn des Erntevorgangs wird die Energieversorgungsleitung 34 mittels eines daran angebrachten Leistungssteckverbinders 68 lösbar an einer im Randbereich 70 des zu bearbeitenden Ackers 72 befindlichen Umspannstation 74 angeschlossen, um die Energieversorgungsleitung 34 mit elektrischer Energie zu speisen. Die Umspannstation 74 steht mit einer Überlandleitung 76 in Verbindung und umfasst einen (nicht gezeigten) Umspanntransformator zur Bereitstellung einer Mittelspannung in der Größenordnung von 4000 bis 8000 Volt. Der Feldhäcksler 10 befindet sich dabei zunächst in einer in Fig. 3 bzw. Fig. 4 nicht wiedergegebenen Ausgangsposition abseits des zu bearbeitenden Ackers 72.

Der gesamte Erntevorgang ist in einen in Fig. 3 dargestellten ersten Bearbeitungsabschnitt bzw. -zyklus 78 und einen in Fig. 4 dargestellten zweiten Bearbeitungsabschnitt bzw. -zyklus 80 aufgeteilt. Das Durchfahren der Bearbeitungsabschnitte 78, 80 erfolgt selbsttätig mittels des autonomen Lenksystems 56 auf Grundlage der von dem GPS-Navigationssystem 52 sowie dem Topografiespeicher 54 bereitgestellten Daten.

Zur Durchführung des eigentlichen Erntevorgangs wird der Feldhäcksler 10 aus seiner Ausgangsposition an den Acker 72 herangefahren. Dabei wird die Energieversorgungsleitung 34 entlang des Kopfendes des Ackers 72 bis zum Startpunkt des ersten Bearbeitungsabschnitts 78 abgelegt. Danach beginnt der Feldhäcksler 10 mit dem Durchfahren des ersten Bearbeitungsabschnitts 78.

### Erster Bearbeitungsabschnitt

Entlang des ersten Bearbeitungsabschnitts 78 wird der elektrische Getriebemotor 60 des Wickelantriebs 36 in Verbindung mit der Betätigungsanordnung 62 des Kabelarms 38 von der Kontrolleinheit 50 derart angesteuert, dass die Energieversorgungsleitung 34 in einem abgeernteten Bereich 82 hinter dem Erntevorsatz 18 zwischen dem Feldhäcksler 10 und einem noch abzuerntenden Bereich 84 versetzt zur Fahrspur des Feldhäckslers 10 auf der Ackeroberfläche 42 abgelegt wird (siehe Fig. 3).

### Zweiter Bearbeitungsabschnitt

Nach Erreichen des Kopfendes des Ackers 72 und Durchfahren eines nicht gezeigten Vorgewendes wird entlang des an den ersten Bearbeitungsabschnitt 78 angrenzenden bzw. diesen überlappenden zweiten Bearbeitungsabschnitts 80 der elektrische Getriebemotor 60 des Wickelantriebs 36 in Verbindung mit der Betätigungsanordnung 62 des Kabelarms 38 von der Kontrolleinheit 50 derart angesteuert, dass die Energieversorgungsleitung 34 in dem abgeernteten Bereich 82 wieder aufgenommen wird (siehe Fig. 4).

Am Ende des zweiten Bearbeitungsabschnitts 80 fährt der Feldhäcksler 10 zum nächsten ersten Bearbeitungsabschnitt 78. Dabei wird die Energieversorgungsleitung 34 weiter entlang des Kopfendes des Ackers 72 bis zum Startpunkt des nächsten ersten Bearbeitungsabschnitts 78 abgelegt und der Erntevorgang wird erneut aufgenommen.

Dieser Vorgang wiederholt sich, bis die komplette Ackeroberfläche 42 streifenförmig abgeerntet worden ist. Anschließend kehrt der Feldhäcksler 10 unter Aufnahme der Energieversorgungsleitung 34 am Kopfende des Ackers 72 zu seiner ursprünglichen Ausgangsposition zurück, um nach Lösen der Leistungssteckverbinders 68 und Verstauen der Energieversorgungsleitung 34 verladen sowie zum nächsten Einsatzort gebracht zu werden. Genauer gesagt wird die Energieversorgungsleitung 34 von der Kontrolleinheit 50 auf Grundlage der von dem GPS-Navigationssystem 52 sowie dem Topografiespeicher 54 bereitgestellten Daten entlang des ersten Bearbeitungsabschnitts 78 auf einem definierten, nämlich GPS-positionierten Kabelpfad abgelegt und von dort beim Abernten der nächsten Pflanzenreihe entlang des zweiten Bearbeitungsabschnitts 80 wieder aufgenommen, ohne dass es zu Überschneidungen mit der Fahrspur des Feldhäckslers 10 oder des Fahrzeuggespanns 28 kommt. Die Ablage der Energieversorgungsleitung 34 erfolgt derart, dass entlang des zweiten Bearbeitungsabschnitts 80 beim Überladen des gehäckselten Ernteguts ein ausreichender Abstand seitens des Fahrzeuggespanns 28 eingehalten werden kann.

Das Fahrzeuggespann 28 befindet sich stets auf der dem abgeernteten Bereich 82 zugewandten Seite des Feldhäckslers 10. Der Auswurfturm 22 wird beim Durchfahren des Vorgewendes, also beim Wenden von der Kontrolleinheit 50 durch Ansteuerung der weiteren Betätigungsanordnung 64 über den Kabelarm 38 hinweg auf die gegenüberliegende Seite des Feldhäckslers 10 geschwenkt.

Des Weiteren wird der elektrische Getriebemotor 60 des Wickelantriebs 36 in Verbindung mit der Betätigungsanordnung 62 von der Kontrolleinheit 50 beim Durchfahren des Vorgewendes derart angesteuert, dass die Energieversorgungsleitung 34 beim Übergang vom ersten Bearbeitungsabschnitt 78 zum zweiten Bearbeitungsabschnitt 80 im wesentlichen zugkraftfrei nachgeführt wird. Definitionsgemäß ist die Energieversorgungsleitung 34 im Wesentlichen dann zugkraftfrei, wenn diese während des Wendevorgangs im Vorgewende ihre Lage zwischen den beiden Bearbeitungsabschnitten 78, 80 weitgehend beibehält, sodass die nächste abzuerntende Pflanzenreihe nicht durch unerwünschte Lageänderungen beschädigt wird.

Um eine mechanische Überlastung der Energieversorgungsleitung 34 zu vermeiden, wird diese von der Kontrolleinheit 50 fahrtgeschwindigkeitsabhängig, und zwar unter Einhaltung einer vorgegebenen Höchstzugkraft auf der Ackeroberfläche 42 abgelegt. Die aktuelle Zugkraft wird von der Kontrolleinheit 50 anhand des Austrittswinkels der Energieversorgungsleitung 34 im Bereich des Führungselements 44 am Kabelarm 38 mittels einer nicht gezeigten Sensoranordnung abgeschätzt. Die aktuelle Fahrtgeschwindigkeit ergibt sich beispielsweise durch Auswertung der von dem GPS-Navigationssystem 52 bereitgestellten Daten.

Optional wird von der Energieversorgungsleitung 34 ein von der Kontrolleinheit 50 mittels der Transpondereinheit 66 eingespeistes bzw. aufmoduliertes Abstandssignal ausgesandt, das zur berührungslosen Ableitung eines gegenüber der Energieversorgungsleitung 34 einzuhaltenden Sicherheitsabstands vorgesehen ist. Das Fahrzeuggespann 28 ist in diesem Fall mit einer entsprechenden Empfangseinheit ausgerüstet, um anhand des empfangenen Abstandssignals abzuschätzen, ob der Sicherheitsabstand unterschritten wird. So lässt sich eine übermäßige Annäherung des Fahrzeuggespanns 28 an die Energieversorgungsleitung 34 erkennen und durch Einleitung geeigneter Gegenmaßnahmen abwenden. Diese erfolgen in Form eines von einer Fahrzeugsteuerung durchgeführten korrigierenden Lenkeingriffs oder Notstopps des Fahrzeuggespanns 28 sowie gegebenenfalls des Feldhäckslers 10, wobei in letzterem Fall ein entsprechender Informationsaustausch über die Mobilfunkschnittstelle 58 erfolgt.

## Patentansprüche

1. Verfahren zur Energieversorgung eines kabelgebunden betriebenen Feldhäckslers, mit einer Kabeltrommel (32) zur Aufnahme einer Energieversorgungsleitung (34), einem mit der Kabeltrommel (32) verbundenen Wickelantrieb (36) zum Auf- und Abspulen der Energieversorgungsleitung (34), einem mittels einer Betätigungsanordnung (62) bezüglich seiner Orientierung und/oder Ausfahrlänge verstellbaren Kabelarm (38) im Heckbereich (40) des Feldhäckslers (10), welcher der geführten Ablage bzw. Aufnahme der Energieversorgungsleitung (34) entlang einer zu befahrenden Ackeroberfläche (42) dient, und einem über den Kabelarm (38) hinweg verschwenkbaren Auswurfturm (22) zum Überladen gehäckselten Ernteguts auf ein nebenher fahrendes Transportfahrzeug (28), wobei der Wickelantrieb (36) in Verbindung mit der Betätigungsanordnung (62) des Kabelarms (38) entlang eines ersten Bearbeitungsstreifens (78) von einer Kontrolleinheit (50) derart angesteuert wird, dass die Energieversorgungsleitung (34) in einem abgeernteten Bereich (82) zwischen dem Feldhäcksler (10) und einem noch abzuerntenden Bereich (84) versetzt zur Fahrspur des Feldhäckslers (10) auf der Ackeroberfläche (42) abgelegt wird, und nach Durchfahren eines Vorgewendes entlang eines an den ersten Bearbeitungsstreifen (78) angrenzenden bzw. diesen überschneidenden zweiten Bearbeitungsstreifens (80) in dem abgeernteten Bereich (82) von der Ackeroberfläche (42) wieder aufgenommen wird.

2. Verfahren nach Anspruch 1, **dadurch gekennzeichnet, dass** der Wickelantrieb (36) in Verbindung mit der Betätigungsanordnung (62) des Kabelarms (38) von der Kontrolleinheit (50) beim Durchfahren des Vorgewendes zwischen dem ersten und zweiten Bearbeitungsabschnitt (78, 80) derart angesteuert wird, dass die Energieversorgungsleitung (34) beim Übergang vom ersten zum zweiten Bearbeitungsabschnitt (80) im Wesentlichen zugkraftfrei nachgeführt wird.

3. Verfahren nach Anspruch 1 oder 2, **dadurch gekennzeichnet, dass** die Energieversorgungsleitung (34) fahrtgeschwindigkeitsabhängig, insbesondere unter Einhaltung einer vorgegebenen Höchstzugkraft auf der Ackeroberfläche (42) abgelegt wird.

4. Verfahren nach wenigstens einem der Ansprüche 1 bis 3, **dadurch gekennzeichnet, dass** die Energieversorgungsleitung (34) seitens einer Umspannstation (74) mit elektrischer Energie gespeist wird.

5. Verfahren nach wenigstens einem der Ansprüche 1 bis 4, **dadurch gekennzeichnet, dass** über die Energieversorgungsleitung (34) ein Abstandssignal ausgesandt wird, das zur berührungslosen Ableitung eines gegenüber der Energieversorgungsleitung (34) einzuhaltenden Sicherheitsabstands vorgesehen ist.

## Claims

1. Method for the energy supply of a cable-bound field chopper, with a cable drum (32) to accommodate an energy supply line (34), a winding drive (36) connected to the cable drum (32) for winding up and unwinding the energy supply line (34), a cable arm (38) in the rear end (40) of the field chopper (10), whose orientation and/or extension length can be adjusted by means of an actuation arrangement (62), said arm being used for the guided laying down or taking up of the energy supply line (34) along a field surface (42) that is to be traveled, and an ejection chute (22) that can be pivoted over and beyond the cable arm (38) for transferring the load of chopped harvested material onto a transport vehicle (28) driving alongside, wherein the winding drive (36) is driven in connection with the actuation arrangement (62) of the cable arm (38) by a control unit (50) along a first processing strip (78) in such a way that the energy supply line (34) is laid down on the field surface (42) in a harvested region (82) between the field chopper (10) and a region (84) to the side of the track of the field chopper (10) that is still to be harvested, and, after driving through a headland, is picked up again from the field surface (42) in the harvested region (82) along a second processing strip (80) that is adjacent to the first processing strip (78) or that overlaps it.

2. Method according to Claim 1, **characterized in that** the winding drive (36) is controlled in connection with the actuation arrangement (62) of the cable arm (38) by the control unit (50) when driving through the headland between the first and second processing section (78, 80) in such a way that the energy supply line (34) is guided with essentially no tensile force when transferring from the first to the second processing section (80).

3. Method according to Claim 1 or 2, **characterized in that** the energy supply line (34) is laid down on the field surface (42) in a manner that depends on the transit speed, in particular while maintaining a specified maximum tensile force.

4. Method according to at least one of Claims 1 to 3, **characterized in that** the energy supply line (34) is fed with electrical energy by a transformer station (74).

5. Method according to one of Claims 1 to 4, **characterized in that** a clearance signal is transmitted via the energy supply line (34) that is provided for a contact-free derivation of a safety clearance to be maintained with respect to the energy supply line (34).

## Revendications

1. Procédé d'alimentation en énergie d'une ramasseuse-hacheuse à fonctionnement par câble, comprenant un enrouleur de câble (32) pour recevoir une ligne d'alimentation en énergie (34), un mécanisme d'enroulement (36), relié à l'enrouleur de câble (32), pour enrouler et dérouler la ligne d'alimentation en énergie (34), un bras support de câble (38), réglable au niveau de son orientation et/ou de sa longueur d'extraction au moyen d'un dispositif d'actionnement (62), dans la partie arrière (40) de la ramasseuse-hacheuse (10), et qui sert à déposer ou à récupérer de manière guidée la ligne d'alimentation en énergie (34) le long d'une surface de champ (42) à parcourir, et une tourelle d'éjection (22) pouvant pivoter par-dessus le bras support de câble (38) pour transférer la récolte hachée sur un véhicule de transport (28) roulant à côté, dans lequel le mécanisme d'enroulement (36) est piloté par une unité de contrôle (50), en liaison avec le dispositif d'actionnement (62) du bras support de câble (38), le long d'une première bande de labour (78) de telle sorte que la ligne d'alimentation en énergie (34) est posée à la surface de champ (42) dans une zone récoltée (82) entre la ramasseuse-hacheuse (10) et une zone restant à récolter (84) avec un décalage par rapport à la voie de la ramasseuse-hacheuse (10), et après le passage d'une tournière le long d'une deuxième bande de labour (80) adjacente à la première bande de labour (78) ou se chevauchant avec celle-ci, elle est à nouveau récupérée à la surface de champ (42) dans la zone récoltée (82) .

2. Procédé selon la revendication 1, **caractérisé en ce que** le mécanisme d'enroulement (36) est piloté par l'unité de contrôle (50), en liaison avec le dispositif d'actionnement (62) du bras support de câble (38), lors du passage de la tournière entre la première et la deuxième bande de labour (78, 80) de telle sorte que la ligne d'alimentation en énergie (34) est amenée à suivre de manière substantiellement sans force de traction lors du passage de la première à la deuxième bande de labour (80) .

3. Procédé selon la revendication 1 ou 2, **caractérisé en ce que** la ligne d'alimentation en énergie (34) est posée à la surface de champ (42) en fonction de la vitesse de déplacement, en particulier en respectant une force de traction maximale prédéfinie.

4. Procédé selon au moins l'une des revendications 1 à 3, **caractérisé en ce que** la ligne d'alimentation en énergie (34) est alimentée en énergie électrique par un poste de transformateur (74).

5. Procédé selon au moins l'une des revendications 1 à 4, **caractérisé en ce qu'**un signal de distance est émis sur la ligne d'alimentation en énergie (34), qui est prévu pour dériver sans contact une distance de sécurité à respecter par rapport à la ligne d'alimentation en énergie (34).
